(19) Europäisches Patentamt
European Patent Office
Office européen des brevets

(11) EP 3 990 685 B1

# (12) EUROPEAN PATENT SPECIFICATION

(45) Date of publication and mention of the grant of the patent:
**28.05.2025 Bulletin 2025/22**

(21) Application number: **20744122.1**

(22) Date of filing: **24.06.2020**

(51) International Patent Classification (IPC):
***D01F 8/06*** (2006.01) ***D01F 8/14*** (2006.01)
***D01F 1/10*** (2006.01) ***B01D 39/16*** (2006.01)
***D04H 1/4291*** (2012.01) ***D04H 1/435*** (2012.01)
***D04H 1/4382*** (2012.01) ***D04H 1/56*** (2006.01)
***D04H 3/007*** (2012.01) ***D04H 3/011*** (2012.01)
***D04H 3/147*** (2012.01) ***D04H 13/02*** (2006.01)
*A62B 23/02* (2006.01) *D01D 5/42* (2006.01)

(52) Cooperative Patent Classification (CPC):
**D01F 8/06; B01D 39/1623; D01F 1/10; D04H 1/4291; D04H 1/435; D04H 1/43828; D04H 3/007; D04H 3/011; D04H 3/147; D04H 13/02;** A62B 23/025; B01D 2239/0233; B01D 2239/1233; D01D 5/423

(86) International application number:
**PCT/IB2020/055984**

(87) International publication number:
**WO 2020/261150 (30.12.2020 Gazette 2020/53)**

## (54) CORE-SHEATH FIBERS, NONWOVEN FIBROUS WEB, AND RESPIRATOR INCLUDING THE SAME

KERN-MANTEL-FASERN, SCHLEIFFASERVLIES UND ATEMSCHUTZGERÄT DAMIT

FIBRES COEUR-GAINE, VOILE FIBREUX NON TISSÉ ET RESPIRATEUR LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 US 201962867933 P**

(43) Date of publication of application:
**04.05.2022 Bulletin 2022/18**

(73) Proprietor: **3M Innovative Properties Co.**
**St. Paul, MN 55133-3427 (US)**

(72) Inventors:
- **SCHULTZ, Nathan E.**
  **Saint Paul, Minnesota 55133-3427 (US)**
- **DUAN, Daniel C.**
  **Saint Paul, Minnesota 55133-3427 (US)**
- **KIRK, Seth M.**
  **Saint Paul, Minnesota 55133-3427 (US)**
- **BERRIGAN, Michael R.**
  **Saint Paul, Minnesota 55133-3427 (US)**
- **BECKER, Zackary J.**
  **Saint Paul, Minnesota 55133-3427 (US)**
- **LI, Fuming B.**
  **Saint Paul, Minnesota 55133-3427 (US)**
- **SEBASTIAN, John M.**
  **Saint Paul, Minnesota 55133-3427 (US)**

(74) Representative: **Mathys & Squire**
**Theatinerstraße 7**
**80333 München (DE)**

(56) References cited:
**EP-A1- 0 325 854** **WO-A1-2014/168902**
**WO-A2-95/05501** **JP-A- 2008 150 753**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present disclosure broadly relates to textile fibers, nonwoven fibrous webs, and articles including them.

BACKGROUND

Air that contains toxic or noxious particulate substances is often filtered (e.g., using a respirator or HVAC filter) to remove those substances.

Respirator performance is regulated by the National Institute for Occupational Safety and Health (NIOSH). NIOSH establishes various removal efficiency standards for respirators that have been challenged with different contaminants. For example, a standard for oily-mist removal efficiency-using suspended droplets of dioctyl phthalate (DOP)-must be met by filter media designated for use in environments where oil is present. Because removal efficiency may change in response to oil-loading, the standards specify a minimum removal efficiency over a fixed exposure to a challenge aerosol.

Effective July 1995, NIOSH instituted standards for nonpowered air-purifying particulate respirators (see 42 C.F.R. Part 84, published Jun. 8, 1995). The regulations include several different classifications, one of which is commonly referred to as "P-series' and is directed at filters that are intended for removal of oil-based liquid particulates. For a P-series certification, the respirator filter media must exhibit nondecreasing efficiency at the end point of a DOP removal efficiency test.

Many air filters include a nonwoven fibrous web of some construction. Such media can include fibers of a polyolefin such as polyethylene and/or polypropylene or some other material that exhibits oil adsorbing and/or absorbing properties.

Patent application EP0325854 discloses a fibrous electret filter made of fibers containing polyolefin (preferably polypropylene) and at least one percent by weight of poly(4-methyl-1-pentene). The electret filter can be made either of melt-blown microfibers or of fibers of fibrillated film.

JP2008150753 discloses a non-woven fabric comprising a core-sheath type composite fiber in which a core component is a polyester resin and a sheath component is a polyolefin resin, and the non-woven fabric is obtained by electret processing. The nonwoven fabric the nonwoven fabric contains 0.1 to 5.0 wt% of at least one compound selected from the group consisting of hindered amine compounds and triazine compounds comprised in the sheath.

SUMMARY

Materials with an affinity for adsorbing and/or absorbing oil include poly(4-methyl-1-pentene). However, this material is relatively costly and has relatively weak tensile properties, making it unattractive as a fiber for filtration media. The present disclosure overcomes one or both of these problems by providing a core-sheath fiber wherein the fiber core may be a relatively inexpensive polymer, while a thin sheath of poly(4-methyl-1-pentene) forms the exterior surface of the fiber. Moreover, those embodiments of the present disclosure with charge-enhancing additive(s) in the fiber core may exhibit enhanced charging and/or electret stability as compared to those with charge-enhancing additive(s) in the sheath layer.

In one aspect, the present disclosure provides a thermoplastic core-sheath fiber comprising:

a polymer fiber core having a coextensive sheath layer disposed thereon, the sheath layer comprising poly(4-methyl-1-pentene) wherein the polymer fiber core comprises polypropylene, polyethylene, polyester, or polystyrene, and wherein the fiber core and the sheath layer have different compositions; and

an electrostatic charge enhancing additive wherein the polymer fiber core comprises the electrostatic charge enhancing additive, and wherein the electrostatic charge enhancing additive is selected from the group consisting of pigments, light stabilizers, primary and secondary antioxidants, metal deactivators, hindered amines, hindered phenols, metal salts, phosphite triesters, phosphoric acid salts, fluorine-containing compounds, and combinations thereof.

In another aspect, the present disclosure provides a nonwoven fibrous web comprising a thermoplastic core-sheath fiber comprising:

a polymer fiber core having a coextensive sheath layer disposed thereon, the sheath layer comprising poly(4-methyl-1-pentene); and

an electrostatic charge enhancing additive.

In another aspect, the present disclosure provides a core-sheath fiber according to the tenth embodiment, further comprising diluent fibers intermingled with the core-sheath fibers.

In another aspect, the present disclosure provides a nonwoven fibrous web comprising core-sheath fibers according to the present disclosure.

In another aspect, the present disclosure provides a respirator comprising a nonwoven fibrous web according to the present disclosure.

In some embodiments the core-sheath fiber has an electret charge.

As used herein:

the term "4-methylpentene refers to 4-methyl-1-pentene;

the term "poly(4-methyl-1-pentene) refers to polymers (homopolymers and copolymers) containing at least 90 weight percent of 4-methylpentan-1,2-diyl ) (i.e.,

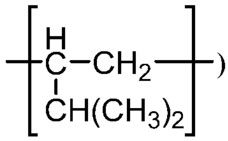

monomeric units and optionally up to 10 weight percent (e.g., up to 10 weight percent, up to 9 weight percent, up to 8 weight percent, up to 7 weight percent, up to 6 weight percent, up to 5 weight percent, up to 4 weight percent, up to 3 weight percent, up to 2 weight percent, up to 1 weight percent) of at least alkylene (e.g., ethylene, propylene, butylene, pentylene, hexylene, isooctylene) monomeric units; and

the term "electret charge" means that there is at least quasi-permanent electrical charge, where "quasi-permanent' means that the electric charge is present under standard atmospheric conditions (22 °C, 101,300 Pascals atmospheric pressure, and 50% relative humidity) for a time period long enough to be significantly measurable. Electric charge may be characterized by the X-ray Discharge Test as described in U.S. Pat. No. 9,815,067 (Schultz et al.) in col. 18, lines 12-42.

Features and advantages of the present disclosure will be further understood upon consideration of the detailed description as well as the appended claims.

BRIEF DESCRIPTION OF THE DRAWINGS

FIG. 1 is a schematic cross-sectional view of an exemplary core-sheath fiber according to the present disclosure.

FIG. 2 is a schematic perspective view of a nonwoven fibrous web according to the present disclosure.

FIG. 3 is a schematic front view of an exemplary respirator 40 according to one embodiment of the present disclosure.

FIG. 4 is a schematic cross-sectional view of mask body 42 in FIG. 3.

It should be understood that numerous other modifications and embodiments can be devised by those skilled in the art, which fall within the scope and spirit of the principles of the claims. The figures may not be drawn to scale.

DETAILED DESCRIPTION

Referring now to FIG. 1, core-sheath fiber 100 comprises a fiber core 110 having a sheath layer 120 disposed thereon. While not shown, the sheath layer 120 is coextensive along the fiber length (fiber ends excluded).

While the core-sheath fiber and the fiber core shown in FIG. 1 have circular cross-sections, other cross-sections may also be used such as, for example, triangular, square, rectangular, pentagonal, hexagonal, heptagonal, octagonal, star-shaped, oval, trilobal, and tetralobal. Likewise, while FIG. 1 shows a centrally located fiber core, it may be located off-center. In some embodiments, multiple fiber cores (e.g., 2, 3, 4, 5, 6, 7, or 8 fiber cores) may be present.

The fiber core may comprise any material, organic or inorganic. For example, the fiber core may comprise ceramic fibers, glass fiber, glass-ceramic fibers, natural fibers, or synthetic fibers.

Preferably, the synthetic fibers comprise at least one thermoplastic polymer. Exemplary thermoplastic polymers include styrenic block copolymers (e.g., SIS, SEBS, SBS), thermoplastic polyolefins, elastomeric alloys (e.g., elastomeric thermoplastic acrylate block copolymers such as polymethyl methacrylate-block-poly(butyl acrylate)-block-polymethyl methacrylate commercially available as Kurarity from Kuraray Company, Ltd., Okayama, Japan), thermoplastic polyurethanes (TPUs), thermoplastic polyesters and copolyesters; polyvinyl chloride; polystyrene; polycarbonates; thermoplastic polyesters (e.g., polylactides and polyethylene terephthalate); perfluorinated polymers and copolymers, thermoplastic polyamides, and blends of any of the foregoing..

Thermoplastic copolyesters can be useful as a first component. Particularly useful are thermoplastic aliphatic polyesters which may further include polylactic acid, polycaprolactone, and other biodegradable polymers. Melt-processable (filament-forming) polylactic acid polymer materials (e.g., L-D copolymers) are commercially available e.g. from Natureworks LLC of Minnetonka, Minnesota, under the trade designations INGEO 6100D, 6202D, and 6260D. Melt-processable polylactic acid polymer materials (e.g., D-lactic acid homopolymers) are available, e.g., from Synbra Technologies, The Netherlands, as SYNTERRA PDLA 1010. Many other potentially suitable polylactic acid materials are also available.

Exemplary thermoplastic polyurethanes (TPUs) include polyester-based TPUs and polyether-based TPUs. One exemplary polyester-based thermoplastic polyurethane can be obtained as IROGRAN (model PS 440-200) from The Huntsman Corporation (The Woodlands, Texas). Exemplary polyether TPU resins include those commercially available as Estane from B.F. Goodrich Company (Cleveland, Ohio).

Exemplary thermoplastic polyolefins include homopolymers and copolymers of propylene, ethylene, 1-butene, 1-hexene, 1-octene, 1-decene, 4-methyl-1-pentene, and 1-octadecene. Of these, homopolymers and copolymers of ethylene and/or propylene are preferred, with propylene being generally preferred. Representative examples include polyethylene (e.g., HDPE, LDPE, LLDPE, VLDPE; ULDPE, UHMW-PE grades), polypropylene, poly(1-butene), poly(3-methylbutene), poly(4-methyl-1-pentene) (e.g., poly-4-methyl-1-pentene resin TPX-DX820, TPX-DX470, TPX-MX002 commercially available from Mitsui Chemicals, Inc., Tokyo, Japan), and copolymers of olefinic monomers discussed herein.

Examples of suitable thermoplastics include, for example, the polypropylenes: ESCORENE PP 3746G commercially available from Exxon-Mobil Corporation, Irving, TX; TOTAL PP3960, TOTAL PP3860, and TOTAL PP3868 commercially available from Total Petrochemicals USA Inc., Houston, TX; and METOCENE MF 650W commercially available from LyondellBasell Industries, Inc., Rotterdam, Netherlands; and the poly-4-methyl-1-pentene resin TPX-MX002 commercially available from Mitsui Chemicals, Inc., Tokyo, Japan.

In some embodiments, the fiber core comprises a thermoplastic polymer capable of retaining a high quantity of trapped electrostatic charge.

Thermoplastic resins useful in the present disclosure include any thermoplastic nonconductive polymer capable of retaining a high quantity of trapped electrostatic charge when formed into a web and charged. Typically, such resins have a DC (direct current) resistivity of greater than $10^{14}$ ohm-cm at the temperature of intended use. Polymers capable of acquiring a trapped charge include polyolefins such as polypropylene, polyethylene (e.g., HDPE, LDPE, LLDPE, VLDPE; ULDPE, UHMW-PE grades), and poly-4-methyl-1-pentene; polyvinyl chloride; polystyrene; polycarbonates; polyesters, including polylactides; and perfluorinated polymers and copolymers. Particularly useful materials include polypropylene, poly-4-methyl-1-pentene, blends thereof or copolymers formed from at least one of propylene and 4-methyl-1-pentene.

The fiber core may further comprise one or more contain conventional adjuvants such as antioxidants, light stabilizers, plasticizers, acid neutralizers, fillers, antimicrobials, surfactants, antiblocking agents, pigments, primers, dispersants, and other adhesion promoting agents. It may be particularly beneficial for medical applications to incorporate the antimicrobials and enhancers discussed in U. S. Pat. No. 7,879,746 (Klun et al.), incorporated herein by reference. It may be particularly beneficial for certain applications to incorporate surfactants discussed in U. S. Pat. Appl. Publ. No. 2012/0077886 (Scholz et al.), incorporated herein by reference.

The fiber core may have any average diameter, but preferably is in a range of from 1 to 100 microns, more preferable 5 to 50 microns, and even more preferably 10 to 25 microns.

The sheath layer comprises poly(4-methyl-1-pentene). It forms a coextensive sheath layer with the outer surface of the fiber core, exclusive of the ends of the fiber core which may or may not be coated with the sheath layer. While not a requirement, the sheath layer is preferably substantially uniform and complete. The sheath layer may have any thickness, but is preferably from 1 to 8 microns, more preferably 1 to 5 microns in average thickness. In some preferred embodiments, the sheath layer comprises 1 to 40 percent by weight of the thermoplastic core-sheath fiber; however, other amounts may also be used.

The fiber core contains an electrostatic charge enhancing additive. Many charge enhancing additives for making electret-containing fiber webs are known in the art. Electrostatic charge enhancing additives according to the invention are pigments, light stabilizers, primary and secondary antioxidants, metal deactivators, hindered amines, hindered phenols, metal salts, phosphite triesters, phosphoric acid salts, fluorine-containing compounds, and combinations thereof.

Exemplary charge-enhancing additives include thermally stable organic triazine compounds or oligomers, which triazine compounds or oligomers contain at least one nitrogen atom in addition to those in the triazine ring, see, for example, U. S. Pat. Nos 6,268,495; 5,976,208; 5,968,635; 5,919,847; and 5,908,598 all to Rousseau et al.

Another charge-enhancing additive known to enhance electrets is "CHIMASSORB 944: (poly[[6-(1,1,3,3,-tetramethylbutyl) amino]-s-triazine-2,4-diyl][[(2,2,6,6-tetramethyl-4- piperidyl) imino] hexamethylene [(2,2,6, 6-tetramethyl-4-piperidyl) imino]]), available from BASF, Ludwigshafen, Germany.

The charge-enhancing additives may be N-substituted amino aromatic compounds, particularly tri-amino substituted compounds, such as 2,4,6-trianilino-p-(carbo-2'-ethylhexyl-l'-oxy)-l,3,5-triazine, available as UVINUL T-150 from BASF, Ludwigshafen, Germany. Another charge additive is 2,4,6-tris-(octadecylamino)triazine, also known as tristearyl melamine ("TSM").

Further examples of charge-enhancing additives are provided in U. S. Publ. Pat. Appln. No. 2011/0137082 (Li et al.). U. S. Pat. Nos. 8613795 (Li et al.), 7,390,351 (Leir et al.), U. S. Pat. No. 5,057,710 (Nishiura et al.), and U. S. Pat. Nos. 4,652,282 and 4,789,504, both to Susumu et al., and U. S. Pat. No. 8,790,449 B2 (Li et al.).

In addition, fibers and/or nonwoven fibrous webs may be treated to chemically modify their surfaces.

The charge-enhancing additive(s) can be added in any suitable amount. The charge-enhancing additives of this disclosure may be effective even in relatively small quantities. Typically, the charge-enhancing additive is present in a thermoplastic resin and charge-enhancing additive blend in amounts of up to about 10 % by weight, more typically in the range of 0.02 to 5 % by weight based upon the total weight of the blend. In some embodiments, the charge-enhancing additive is present in an amount ranging from 0.1 to 3 % by weight, 0.1 to 2 % by weight, 0.2 to 1.0 % by weight, or 0.25 to 0.5 % by weight.

Blends of the thermoplastic resin and the charge-enhancing additive can be prepared by well-known methods. Typically, the blend is processed using melt extrusion techniques, so the blend may be preblended to form pellets in a batch process, or the thermoplastic resin and the charge-enhancing additive may be mixed in the extruder in a continuous process. Where a continuous process is used, the thermoplastic resin and the charge-enhancing additive may be pre-mixed as solids or added separately to the extruder and allowed to mix in the molten state.

Examples of melt mixers that may be used to form preblended pellets include those that provide dispersive mixing, distributive mixing, or a combination of dispersive and distributive mixing. Examples of batch methods include those using a BRABENDER (e. g. a BRABENDER PREP CENTER, commercially available from C.W. Brabender Instruments, Inc.; South Hackensack, New Jersey) or BANBURY internal mixing and roll milling equipment (e.g. equipment available from Farrel Co.; Ansonia, Connecticut). After batch mixing, the mixture created may be immediately quenched and stored below the melting temperature of the mixture for later processing.

Examples of continuous methods include single screw extruding, twin screw extruding, disk extruding, reciprocating single screw extruding, and pin barrel single screw extruding. The continuous methods can include utilizing both distributive elements, such as cavity transfer mixers (e.g. CTM, commercially available from RAPRA Technology, Ltd.; Shrewsbury, England) and pin mixing elements, static mixing elements or dispersive mixing elements (commercially available from e.g., MADDOCK mixing elements or SAXTON mixing elements).

Examples of extruders that may be used to extrude preblended pellets prepared by a batch process include the same types of equipment described above for continuous processing. Useful extrusion conditions are generally those which are suitable for extruding the resin without the additive.

Fibers used in practice of the present disclosure (including core-sheath fibers) may have any average fiber diameter, and may be continuous, random, and/or staple fibers. For example, in some embodiments, the fibers (i.e., individual fibers) may have an average fiber diameter of greater than or equal to 11 microns (e.g., greater than or equal to 12 microns, greater than or equal to 15 microns, greater than or equal to 20 microns) up to 25 microns, up to 26 microns, up to 27 microns, up to 28 microns, up to 29 microns, up to 30 microns, up to 35 microns, up to 40 microns, or even up to 50 microns). In some preferred embodiments, the fiber has an average diameter of , preferably 10-50 microns, more preferably 15-40, more preferably 20 to 30 microns or even 20 to 25 microns).

Methods for making core-sheath fibers are well known and need not be described here in detail. To form a core sheath fiber, generally, at least two polymers are extruded separately and fed to a polymer distribution system where the polymers are introduced into a segmented spinneret plate. The polymers follow separate paths to the fiber spinneret and are combined in a spinneret hole which comprises, for example, at least two concentric circular holes thus providing a core-sheath type fiber. Other configurations are also contemplated. The combined polymer filament is then cooled, solidified, and drawn, generally by a mechanical roll system, to an intermediate filament diameter and collected. Subsequently, the filament may be "cold drawn" at a temperature below its softening temperature, to the desired finished fiber diameter and crimped or texturized and cut into a desirable fiber length. Multicomponent fibers can be cut into relatively short lengths, such as staple fibers which generally have lengths in the range of about 25 to about 50 millimeters and short-cut fibers which are even shorter and generally have lengths less than about 18 millimeters. See, for example, U. S. Pat. Nos. 4,789,592 (Taniguchi et al.) and 5,336,552 (Strack et al.).

Fibers (filaments) described herein can generally be made using techniques known in the art for making filaments. Such techniques include wet spinning, dry spinning, melt spinning, melt blowing, or gel spinning.

Particularly advantageous to form core-sheath filaments is melt spinning. In melt spinning, a polymer is heated, passed through a spinneret, and fibers solidify upon cooling. For example, a melt spinning process can occur to collect the multicomponent filaments. The term "meltspun" as used herein refers to filaments that are formed by extruding molten filaments out of a set of orifices and allowing the filaments to cool and (at least partially) solidify to form filaments, with the

filaments passing through an air space (which may contain streams of moving air) to assist in cooling and solidifying the filaments, and with the thus-formed fibers then passing through an attenuation (i.e., drawing) unit to draw the fibers.

Melt spinning can be distinguished from melt blowing, which involves the extrusion of molten filaments into converging high velocity air streams introduced by way of air-blowing orifices located in close proximity to the extrusion orifices. Melt spinning can also be distinguished from electrospinning in that electrospinning could be described as extruding out of a need a solvent solution. A modification of the spinneret results in multicomponent (e.g., core-sheath) fibers (See, e.g., U. S. Pat. Nos. 4,406,850 (Hills), 5,458,972 (Hagen), 5,411,693 (Wust), 5,618,479 (Lijten), and 5,989,004 (Cook)). Filaments according to the present disclosure can also be made by fibrillation of a film, which may provide filaments having a rectangular cross-section.

Referring now to FIG. 2, exemplary nonwoven fibrous web 200 comprises core-sheath fibers 210 and optional secondary fibers 220. Core-sheath fibers 210 have an average fiber diameter of 2 to 100 microns and comprise a core-sheath fiber according to the present disclosure. Optional secondary fibers may be any fiber type and/or have any average fiber diameter.

Nonwoven fibrous webs may be made, for example, by conventional air laid, carded, stitch bonded, spunbonded, wet laid, and/or meltblown procedures.

Spunbonded nonwoven fibrous webs can be formed according to well known conventional methods wherein meltspun fibers are deposited on a moving belt where they form a nonwoven continuous fiber web having interfiber bonds. Meltblown nonwoven fibrous webs are made by a similar process except that high velocity gas impinges on the extruded fibers thereby stretching and thinning them before they are collected on a rotating drum. Meltblown fiber webs likewise have interfiber bonds, although the webs generally do not have the cohesive strength of corresponding spunbonded fiber webs.

In some embodiments, a nonwoven web can be made by air-laying of fibers (e.g., core-sheath fibers and optional secondary fibers). Air-laid nonwoven fibrous webs may be prepared using equipment such as, for example, that available as a RANDO WEBBER from Rando Machine Company of Macedon, New York. In some embodiments, a type of air-laying may be used that is termed gravity-laying, as described, e.g., in U. S. Pat. Application Publication 2011/0247839 to Lalouch. Nonwoven fibrous webs may be densified and strengthened, for example, by techniques such as crosslapping, stitchbonding, needletacking, hydroentangling, chemical bonding, and/or thermal bonding.

Nonwoven fibrous webs according to the present disclosure may have any basis weight, thickness, porosity, and/or density unless otherwise specified. In some embodiments, the nonwoven fibrous webs are lofty open nonwoven fibrous webs. In some embodiments, fibers of the nonwoven fibrous web have an effective fiber diameter of from at least 5, 10, 15, 20, 25, 30, or 40 micrometers and at most 125, 100, 90, 80, 75, or 50 micrometers.

Core-sheath fiber and/or nonwoven fibrous web containing core-sheath fiber may be charged as it is formed, or charged after it is formed. For electret filter media (e.g., a nonwoven fibrous web), the media is generally charged after the fiber web is formed.

In general, any standard charging method known in the art may be used. For example, charging may be carried out in a variety of ways, including tribocharging and corona discharge. A combination of methods may also be used. As mentioned above, in some embodiments, the electret webs of this disclosure have the desirable feature of being capable of being charged by corona discharge alone, particularly DC corona discharge, without the need of additional charging methods. Examples of suitable corona discharge processes are described in U. S. Pat. Re. No. 30,782 (van Turnhout), U. S. Pat. Re. No. 31,285 (van Turnhout), U. S. Pat. Re. No. 32,171 (van Turnhout), U. S. Pat. No. 4,215,682 (Davis et al.), U. S. Pat. No. 4,375,718 (Wadsworth et al.), U. S. Pat. No. 5,401,446 (Wadsworth et al.), U. S. Pat. No. 4,588,537 (Klaase et al.), U. S. Pat. No. 4,592,815 (Nakao), U. S. Pat. No. 6,365,088 (Knight et al.), British Pat. 384,052 (Hansen), U. S. Pat. No. 5,643,525 (McGinty et al.), Japanese Pat. No. 4,141,679 B2 (Kawabe et al.). Further methods are discussed by M. Paajanen et. al. in Journal of Physics D: Applied Physics

(2001), vol. 34, pp. 2482-2488, and by G. M. Sessler and J. E. West in Journal of Electrostatics (1975), 1, pp. 111-123.

Another technique that can be used to charge the electret web is hydrocharging. Hydrocharging of the web is carried out by contacting the fibers with water in a manner sufficient to impart a charge to the fibers, followed by drying of the web. One example of hydrocharging involves impinging jets of water or a stream of water droplets onto the web at a pressure sufficient to provide the web with filtration enhancing electret charge, and then drying the web. The pressure necessary to achieve optimum results varies depending on the type of sprayer used, the type of polymer from which the web is formed, the type and concentration of additives to the polymer, the thickness and density of the web and whether pre-treatment, such as corona surface treatment, was carried out prior to hydrocharging. Generally, water pressures in the range of about 10 to 500 psi (69 to 3450 kPa) are suitable. The jets of water or stream of water droplets can be provided by any suitable spray device. One example of a useful spray device is the apparatus used for hydraulically entangling fibers. An example of a suitable method of hydrocharging is described in U. S. Pat. No. 5,496,507 (Angadjivand et al.). Other methods are described in U. S. Pat. No. 6,824,718 (Eitzman et al.), U. S. Pat. No. 6,743,464 (Insley et al.), U. S. Pat. No. 6,454,986 (Eitzman et al.), U. S. Pat. No. 6,406,657 (Eitzman et al.), and U. S. Pat. No. 6,375,886 (Angadjivand et al.). The

hydrocharging of the web may also be carried out using the method disclosed in the U. S. Pat. No. 7,765,698 (Sebastian et al.).

Core-sheath fibers according to the present disclosure are useful, for example, in the manufacture of nonwoven filter media, and especially nonwoven electret filter media.

In one embodiment, the core sheath fiber may be included in a respirator. As used herein, the term "respirator" means a system or device worn over a person’s breathing passages to prevent contaminants from entering the wearer’s respiratory tract and/or protect other persons or things from exposure to pathogens or other contaminants expelled by the wearer during respiration, including, but not limited to filtering face masks.

Referring now to FIGS. 3 and 4, exemplary respirator 40 comprises mask body 42 which can be of curved, hemispherical shape or may take on other shapes as desired (e.g., see U. S. Pat. Nos. 5,307,796 (Kronzer et al.) and 4,827,924 (Japuntich)). In mask 40, electret nonwoven fibrous web (i.e., filter media) 200 according to the present disclosure is sandwiched between cover web 43 and inner shaping layer 45. Shaping layer 45 provides structure to the mask body 42 and support for filter media 200.

Shaping layer 45 may be located on either side of the filter media 200 and can be made, for example, from a nonwoven web of thermally-bondable fibers molded into a cup-shaped configuration. The shaping layer can be molded in accordance with known procedures (e.g., see U.S. Pat. No. 5,307,796 (Kronzer et al.). The shaping layer or layers typically are made of bicomponent fibers that have a core of a high melting materials such as polyethylene terephthalate, surrounded by a sheath of lower melting material so that when heated in a mold, the shaping layer conforms to the shape of the mold and retains this shape when cooled to room temperature. When pressed together with another layer, such as the filter layer, the low melting sheath material can also serve to bond the layers together.

To hold the mask 40 snugly on the wearer’s face, masks body 42 can have straps 52, tie strings, a mask harness, etc. attached thereto. A pliable soft band 54 of metal, such as aluminum, can be provided on mask body 42 to allow it to be shaped to hold the mask 40 in a desired fitting relation ship on the nose of the wearer (e.g., see U. S. Pat. No. 5,558,089 (Castiglione et al.)). Respirators according to the present disclosure may also include additional layers, valves (e.g., see U. S. Pat. No. 5,509,436 (Japuntich et al.), molded face pieces, etc. Examples of respirators that can incorporate the electret filter media according to the present disclosure include those described in U. S. Pat. Nos. 4,536,440 (Berg), 4,827,924 (Japuntich), 5,325,892 (Japuntich et al.), 4,807,619 (Dyrud et al.), 4,886,058 (Brostrom et al.), and RE35,062 (Brostrom et al.).

SELECT EMBODIMENTS OF THE PRESENT DISCLOSURE

In a first embodiment, the present disclosure provides a thermoplastic core-sheath fiber comprising:

a polymer fiber core having a coextensive sheath layer disposed thereon, the sheath layer comprising poly(4-methyl-1-pentene), wherein the polymer fiber core comprises polypropylene, polyethylene, polyester, or polystyrene, and wherein the fiber core and the sheath layer have different compositions; and
an electrostatic charge enhancing additive, wherein the polymer fiber core comprises the electrostatic charge enhancing additive, and wherein the electrostatic charge enhancing additive is selected from the group consisting of pigments, light stabilizers, primary and secondary antioxidants, metal deactivators, hindered amines, hindered phenols, metal salts, phosphite triesters, phosphoric acid salts, fluorine-containing compounds, and combinations thereof.

In a second embodiment, the present disclosure provides a core-sheath fiber according to any of the first embodiment, wherein the sheath layer comprises 1 to 40 percent by weight of the thermoplastic core-sheath fiber.

In a third embodiment, the present disclosure provides a core-sheath fiber according to any of the first to second embodiments, wherein the core-sheath fiber has an electret charge.

In a fourth embodiment, the present disclosure provides a core-sheath fiber according to any of the first to third embodiments, wherein the polymer fiber core comprises the electrostatic charge enhancing additive.

In a fifth embodiment, the present disclosure provides a core-sheath fiber according to any of the first to fourth embodiments, wherein the sheath layer comprises the electrostatic charge enhancing additive.

In an sixth embodiment, the present disclosure provides a core-sheath fiber according to any of the first to fifth embodiments, wherein both the polymer fiber core and the sheath layer comprise the electrostatic charge enhancing additive.

In a seventh embodiment, the present disclosure provides a core-sheath fiber according to any of the first to sixth embodiments, , wherein core-sheath fiber has an average fiber diameter of 20 to 30 microns.

In a eight embodiment, the present disclosure provides a nonwoven fibrous web comprising core-sheath fibers according to any of the first to seventh embodiments.

In an ninth embodiment, the present disclosure provides a core-sheath fiber according to the eight embodiment,

further comprising diluent fibers intermingled with the core-sheath fibers.

In a tenth embodiment, the present disclosure provides a respirator comprising a nonwoven fibrous web according to the tenth or ninth embodiment.

Objects and advantages of this disclosure are further illustrated by the following non-limiting examples, but the particular materials and amounts thereof recited in these examples, as well as other conditions and details, should not be construed to unduly limit this disclosure.

EXAMPLES

Unless otherwise noted, all parts, percentages, ratios, etc. in the Examples and the rest of the specification are by weight. In these Examples "CE-" indicates a comparative example and "E-" indicates an example.

TABLE 1

| POLYMER | GRADE | ABBREVIATION | SUPPLIER |
|---|---|---|---|
| Poly(4-methyl-1-pentene) | TPX DX820 | PMP-1 | Mitsui Chemicals, Inc., Tokyo, Japan |
| | TPX DX470 | PMP-2 | Mitsui Chemicals, Inc. |
| Polypropylene | MF-650X | PP-1 | LyondellBasell Industries N.V., Rotterdam, The Netherlands |
| | Total 3860X | PP-2 | Total Petrochemicals, Brussells, Belgium |
| | Total 3766 | PP-3 | Total Petrochemicals |
| Polystyrene | PS U249 | PS-1 | Unigel, Sao Paulo, Brazil, |
| Polylactic Acid | 6202D | PLA-1 | NatureWorks, Minnetonka, Minnesota |

TABLE 2

| ADDITIVE | SUPPLIER | ABBREVIATION |
|---|---|---|
| Phenol 9 - Ca | Prepared as described in U. S. Pat. Appln. Publ. No. 2019/0003112 (Schultz et al.) | CA-1 |
| 2,4-Bis(octylthio)-6-(4-hydroxy-3,5-di-tert-butylanilino)-1,3,5-triazine (Irganox565 / CAS No. 991-84-4) | BASF SE, Ludwigshafen am Rhein, Germany | CA-2 |
| 1,3-Dihydro-4(or 5)-methyl-2H-benzimidazole-2-thione, zinc salt (ZMTI / CAS No. 61617-00-3) | Vanderbilt Chemicals, LLC, Norwalk, Connecticut | CA-3 |
| *N*,*N'*-bis(2,2,6,6-tetramethylpiperidin-4-yl)hexane-1,6-diamine;2,4,6-trichloro-1,3,5-triazine;2,4,4-trimethylpentan-2-amine (Chimassorb944 / CAS No. 71878-19-8) | BASF SE | CA-4 |
| Poly [(6-morpholino-s-triazine-2,4-diyl)[2,2,6,6-tetramethyl-4-piperidyl) imino]- hexamethylene[(2,2,6,6-tetramethyl-4-piperidyl) imino]] (Cyasorb 3346 / CAS No. 82451-48-7) | Cytec Industries, Inc., Saddle Brook, New Jersey | CA-5 |
| Poly((6-morpholino-s-triazine-2,4-diyl)(1,2,2,6,6-pentamethyl-4-piperidyl)imino)hexamethylene (1,2,2,6,6-pentamethyl-4-piperidyl)imino)) (Cyasorb 3529 / CAS No. 193098-40-7) | Cytec Industries, Inc. | CA-6 |

*Fiber & Nonwoven fibrous web Sample Preparation*

*Step A - Nonwoven fibrous web Formation:*

Nonwoven fibrous webs were formed by first dry blending a compounded charging additive with one of the thermoplastic resin grades, and then extruding fibers to form a BMF or spunbond web. In the case of sheath/core samples, the sheath and core may individually contain one additive, a blend of additives, or no additives in some case.

*Step B - Electret Preparation:*

Nonwoven fibrous webs prepared in Step A above were charged by one of two electret charging methods: corona charging, corona pre-treatment and hydrocharging, or hydrocharging. The methods are designated as Charging Method C and H, respectively.

*Charging Method C - Corona Charging:*

Nonwoven fibrous webs prepared in Step A (above) were charged by DC corona discharge. The corona charging was accomplished by passing the web on a grounded surface under a corona wire source with a corona current of about 0.01 milliamp per centimeter of discharge source length at a rate of about 3 centimeters per second. The corona source was about 3.5 centimeters above the grounded surface on which the web was carried. The corona source was driven by a positive DC voltage.

*Charging Method H - Hydrocharging:*

A fine spray of high purity water having a conductivity of less than 5 microsiemens per centimeter was continuously generated from a nozzle operating at a pressure of 896 kilopascals (130 psig) and a flow rate of approximately 1.4 liters/minute. Nonwoven fibrous webs prepared in Step A (above) were conveyed by a porous belt through the water spray at a speed of approximately 10 centimeters/second while a vacuum simultaneously drew the water through the web from below. Each melt-blown web was run through the hydrocharger twice (sequentially once on each side) and then allowed to dry completely overnight prior to filter testing.

*Filtration Performance Test Method, Non-Woven Melt-Blown Microfiber Webs*

*Initial Filtration Performance:*

The samples were tested for % aerosol penetration (% Pen) and pressure drop (ΔP), and the quality factor (QF) was calculated from these two values. The filtration performance (% Pen and QF) of the nonwoven microfiber webs were evaluated using an Automated Filter Tester AFT Model 8130 (available from TSI, Inc., St. Paul, MN) using dioctyl phthalate (DOP) as the challenge aerosol and a pressure transducer that measured pressure drop (ΔP (mm of $H_2O$)) across the filter. The DOP aerosol was nominally a monodisperse 0.33 micrometer mass median (MMD) diameter having an upstream concentration of 50-200 mg/m$^3$ and a target of 100 mg/m$^3$. The aerosol was forced through a sample of filter media at a calibrated flow rate of 85 liters/minute (face velocity of 13.8 cm/s). The aerosol ionizer was turned off for these tests. The total testing time was 23 seconds (rise time of 15 seconds, sample time of 4 seconds, and purge time of 4 seconds). The concentration of DOP aerosols was measured by light scattering both upstream and downstream of the filter media using calibrated photometers. The DOP % Pen is defined as: % Pen = 100 × (DOP concentration downstream/DOP concentration upstream). For each material, 6 separate measurements were made at different locations on the melt-blown web and the results were averaged.

The % Pen and ΔP were used to calculate a QF by the following formula:

$$QF = -\ln(\%\ Pen/100) / \Delta P$$

where ln stands for the natural logarithm. A QF for an as-prepared sample is referred to as Q0. An additional test is to thermally age six samples prior to measuring QF at 72 C for 3 days. The average of these six QFs are denoted Q3.

*Loading Test*

DOP loading is a direct measurement of the resistance of a filter medium to degradation due to exposure to an oily mist aerosol. The penetration through, and the pressure drop across, a sample were monitored during prolonged exposure of the sample to a DOP aerosol under specified conditions. Standard equipment and test procedures were used for measuring filter performance.

The measurements were made using an automated filter tester (AFT) Model 8130 that was set up with an oil aerosol generator. DOP % Penetration was calculated automatically by the AFT instrument, where the concentrations upstream and downstream were measured by light scattering. Measurements were performed with the aerosol neutralizer turned off and a flow rate through the sample of 85 liters per minute (L/min), unless otherwise indicated.

Samples were tested in the following manner. Samples were cut and mounted in a sample holder such that an 11.45 cm (4.5 inch) diameter portion of the sample was exposed to the aerosol. The face velocity was 13.8 centimeters/

second (cm/sec). Each test was continued until the exposure on the sample was exposed to 100 mg or 200 mg DOP, depending on the specific test. The DOP % Penetration and corresponding Pressure Drop data were determined by the AFT and transmitted to an attached computer where the data was stored.

QFs may also be calculated from the loading curve, using the initial DOP penetration and DOP penetrations after loadings of 100 mg and 200 mg. These values are referred to as Q0', Q100, and Q200, respectively.

*Determination of Effective Fiber Diameter (EFD) and Solidity:*

Effective Fiber Diameter and Solidity were determined according to methods as described in Davies, C. N., The Separation of Airborne Dust and Particulates, Institution of Mechanical Engineers, London Proceedings, IB (1952).

COMPARATIVE EXAMPLE CE-1, CE1a-CE5a and CE7aand EXAMPLES E-6 and E-8

Core-sheath fibers were prepared with an electrostatic-charging additive in the sheath, in the core, and combinations thereof. The initial performance was measured by the initial Quality-factor, Q0, and the Quality-factor after aging, Q3. The web properties, compositions, charging method, and filtration performance are listed in Table 3 (below), wherein all of the webs were spunbond webs.

TABLE 3

| EXAMPLE | BASIS WEIGHT, gsm | SOLIDITY | EFD, microns | ΔP, mm of $H_2O$ | SHEATH | | | CORE | | CHARGING METHOD | Q0 | Q3 |
|---|---|---|---|---|---|---|---|---|---|---|---|---|
| | | | | | Resin | Additive | %sheath | Resin | Additive | | | |
| CE-1 | 120 | 13.5 | 17.8 | 2.9 | PMP-1 | None | 20 | PP-3 | None | C | 0.30 | 0.22 |
| CE-1a | 120 | 13.4 | 17.8 | 2.9 | PMP-1 | 0.15% CA-3 | 40 | PP-3 | None | C | 0.29 | 0.27 |
| CE-2a | 65 | 13.0 | 17.7 | 1.5 | PMP-1 | 0.15% CA-3 | 20 | PP-3 | None | C | 0.39 | 0.36 |
| CE-3a | 120 | 13.4 | 17.6 | 2.9 | PMP-1 | 0.15% CA-1 | 20 | PP-3 | None | C | 0.32 | 0.34 |
| CE-4a | 65 | 11.9 | 17.7 | 1.4 | PMP-1 | 0.15% CA-1 | 20 | PP-3 | None | C | 0.41 | 0.47 |
| CE-5a | 120 | 13.9 | 14.4 | 4.5 | PMP-1 | 0.15% CA-1 | 20 | PP-3 | None | C | 0.21 | 0.20 |
| E-6 | 120 | 12.0 | 17.8 | 2.8 | PMP-1 | None | 20 | PP-3 | 0.1% CA-1 | C | 0.31 | 0.29 |
| CE-7 | 120 | 10.5 | 17.1 | 1.9 | PMP-1 | 0.40% CA-4 + 0.1% CA-3 | 20 | PS-1 | None | C | 0.31 | 0.25 |
| E-8 | 79 | 10% | 26.3 | 0.7 | PMP-1 | 0.5% CA-2 | 20 | PP-2 | 0.1% CA-1 | C | 0.47 | 0.47 |

The results in Table 3 demonstrate that the charge-enhancing additive increased the electret charge stability.

COMPARATIVE EXAMPLES CE-2 to CE-4 and CE-9a to CE-11a and EXAMPLE E-12

These examples report oil loading results for PP webs and PMP webs. The values reported are the %penetration at 0 mg, 100 mg, and 200 mg of DOP exposure. Also measured was how rapidly the charge was deteriorating by reporting the %Chg @ 100 mg and %Chg @ 200 mg, where these values are reported as:

$$\%Chg\ @\ 100 = (\%Pen_{100\ mg} - \%Pen_{0\ mg}) / \%Pen_{100\ mg} \times 100$$

$$\%Chg\ @\ 200 = (\%Pen_{200\ mg} - \%Pen_{0\ mg}) / \%Pen_{100\ mg} \times 200.$$

The web properties, compositions, and results for the oil loading of 2-layer constructions are reported in Tables 4 and 5. The results show the utility of PMP webs as prefilters.

TABLE 4

| EXAMPLE | BASIS WEIGHT, gsm | ΔP, mm $H_2O$ | %Solidity | EFD, microns | SHEATH | | | CORE | | WEB TYPE |
|---|---|---|---|---|---|---|---|---|---|---|
| | | | | | RESIN | ADDITIVE | WT.% | RESIN | ADDITIVE | |
| CE-2 | 117 | 2.6 | 10.8 | 17.1 | PP-3 | 1% CA-5 | 50 | PP-3 | | SB |
| CE-3 | 117 | 2.6 | 10.8 | 17.1 | PP-3 | 1% CA-5 | 50 | PP-3 | | SB |
| CE-4 | 122 | 2.7 | 11.2 | 17.4 | PP-3 | 1% CA-6 | 50 | PP-3 | | SB |
| CE-9a | 119 | 2.8 | 12.7 | 18.1 | PMP-1 | 0.15% CA-1 | 40 | PP-3 | | SB |
| CE-10a | 119 | 2.8 | 13.6 | 18.4 | PMP-1 | 0.15% CA-3 | 40 | PP-3 | | SB |
| CE-11a | 120 | 2.9 | 12.2 | 17.8 | PMP-1 | 0.8% CA-5 | 40 | PP-3 | | SB |
| E-12 | 65 | 7.1 | 10.2 | 7.3 | PMP-1 | none | 50 | PP-1 | 0.15% CA-1 | BMF |

TABLE 5

| EXAMPLE | CHARGING METHOD | ΔP, mm $H_2O$ | %Pen0 | %Pen 100 | %Pen200 | %Chg @ 100 | %Chg @ 200 |
|---|---|---|---|---|---|---|---|
| CE-2 | C | 4.9 | 21.8 | 47.4 | 70.8 | 117.4 | 224.8 |
| CE-3 | H | 5.0 | 5.1 | 22.0 | 40.4 | 333.1 | 695.3 |
| CE-4 | H | 4.4 | 3.9 | 20.7 | 41.6 | 433.5 | 972.2 |
| CE-9a | C | 5.3 | 22.4 | 28.5 | 34.3 | 27.2 | 53.1 |
| CE-10a | C | 4.9 | 25.3 | 32.1 | 38.2 | 26.9 | 51.0 |
| CE-11a | C | 4.7 | 23.9 | 31.4 | 39.9 | 31.4 | 66.9 |
| E-12 | C | 7.5 | 27.1 | 33.0 | 43 | 21.8 | 58.7 |

COMPARATIVE EXAMPLES CE-5 and CE-6 and CE-13 and EXAMPLE E-14

In these examples, the effect of multilayer loading on oil penetration shows that high surface area, charged PMP webs can have decreasing aerosol penetration. The data, along with non-PMP comparisons are reported in Table 6 (below).

TABLE 6

| EXAMPLE | DESCRIPTION | NUMBER OF LAYERS | ΔP, mm of $H_2O$ | %Pen0 | %Pen100 | %Pen200 | %Chg @ 100 | %Chg @ 200 |
|---|---|---|---|---|---|---|---|---|
| CE-5 | CE-2 | 2 | 4.9 | 21.8 | 47.4 | 72.4 | 117.4 | 232.1 |
| | | 4 | 8.9 | 11.5 | 23.0 | 30.8 | 100.0 | 167.8 |
| CE-6 | CE-3 | 1 | 2.2 | 20.0 | 49.3 | 69.2 | 146.5 | 246.0 |
| | | 3 | 7.2 | 1.4 | 6.2 | 12.6 | 352.6 | 819.7 |
| | | 4 | 9.2 | 0.3 | 1.8 | 4.4 | 489.2 | 1364.6 |
| CE-13a | CE-11a | 2 | 4.7 | 23.9 | 31.3 | 39.9 | 31.0 | 66.9 |
| | | 4 | 10.1 | 7.1 | 8.4 | 7.0 | 17.1 | -1.5 |
| E-14 | E-6 | 2 | 4.2 | 25.1 | 30.9 | 34.6 | 23.1 | 37.8 |
| | | 4 | 10.9 | 4.90 | 4.5 | 3.7 | -7.8 | -24.9 |

COMPARATIVE EXAMPLES CE-7 to CE-10 and EXAMPLES E-15 to E-22

In these examples the Q0, Q100, and Q200 values computed from oil-loading values for webs without charging additives. All of the constructions are core-sheath with a PMP sheath. The web properties are listed in Table 7 and the results are listed in Table 8.

TABLE 7

| EXAMPLE | BASIS WEIGHT, gsm | % SOLIDITY | EFD, microns | ΔP, mm of $H_2O$ | SHEATH RESIN | SHEATH, wt. % of fiber | SHEATH ADDITIVE | CORE RESIN | CORE ADDITIVE | NO. OF LAYERS |
|---|---|---|---|---|---|---|---|---|---|---|
| CE-7 | 118 | 15.0 | 18.4 | 2.9 | PMP-1 | 20 | | PP-2 | | 1 |
| CE-8 | 118 | 15.0 | 18.4 | 2.9 | PMP-1 | 20 | | PP-2 | | 2 |
| CE-9 | 118 | 16.1 | 18.6 | 3.1 | PMP-1 | 10 | | PP-2 | | 2 |
| CE-10 | 117 | 16.8 | 18.4 | 3.3 | PMP-1 | 5 | | PP-2 | | 2 |
| E-15 | 121 | 15.0 | 18.8 | 2.9 | PMP-1 | 20 | | PP-2 | 0.15% CA-1 | 1 |
| E-16 | 121 | 15.0 | 18.8 | 2.9 | PMP-1 | 20 | | PP-2 | 0.15% CA-1 | 2 |
| E-17 | 117 | 16.1 | 19.2 | 3.0 | PMP-1 | 10 | | PP-2 | 0.15% CA-1 | 2 |
| E-18 | 117 | 15.8 | 18.9 | 2.9 | PMP-1 | 5 | | PP-2 | 0.15% CA-1 | 2 |
| E-19 | 97 | 12.8 | 16.8 | 2.6 | PMP-1 | 20 | | PP-2 | 0.15% CA-1 | 1 |
| E-20 | 100 | 12.1 | 21.9 | 1.5 | PMP-1 | 20 | | PP-2 | 0.15% CA-1 | 1 |
| E-21 | 80.2 | 9.8 | 26.7 | 0.7 | PMP-1 | 20 | | PP-2 | 0.15% CA-1 | 1 |
| E-22 | 78.8 | 10.0 | 26.3 | 0.7 | PMP-1 | 20 | 0.5% CA-2 | PP-2 | 0.15% CA-1 | 1 |

TABLE 8

| EXAMPLE | ΔP, mm of $H_2O$ | %Pen0 | %Pen 100 | %Pen200 | Q0' | Q100 | Q200 |
|---|---|---|---|---|---|---|---|
| CE-7 | 2.5 | 68.8 | 71.1 | | 0.15 | 0.14 | |
| CE-8 | 5.6 | 34.3 | 43.9 | 54.8 | 0.19 | 0.15 | 0.11 |
| CE-9 | 5.6 | 43.8 | 53.9 | 69.0 | 0.15 | 0.11 | 0.07 |
| CE-10 | 6.0 | 43.1 | 57.8 | 72.2 | 0.14 | 0.09 | 0.05 |
| E-15 | 2.6 | 53.0 | 59.3 | | 0.24 | 0.20 | |
| E-16 | 5.0 | 25.8 | 32.1 | 43.4 | 0.27 | 0.23 | 0.17 |
| E-17 | 5.1 | 27.8 | 40.1 | 51.3 | 0.25 | 0.18 | 0.13 |
| E-18 | 5.9 | 27.5 | 37.8 | 53.5 | 0.22 | 0.16 | 0.11 |
| E-19 | 2.4 | 51.7 | 61.2 | | 0.27 | 0.20 | |
| E-20 | 1.5 | 57.3 | 64.9 | | 0.37 | 0.29 | |
| E-21 | 0.8 | 60.1 | 70.1 | | 0.64 | 0.44 | |
| E-22 | 0.7 | 69.0 | 74.7 | | 0.53 | 0.42 | |

COMPARATIVE EXAMPLES CE-11 to CE-14 and EXAMPLES E-23 to E-30

In these examples, select nonwoven fibrous webs were used as prefilters for an electret-PP web. Most of the webs used as prefilters have been described above. For the prefilter webs that have not been described above, information is given below in Table 9. Information about the laminate constructions are and he results are given in Table 10

TABLE 9

| WEB | WEB TYPE | CHARGING METHOD | BASIS WEIGHT, gsm | % SOLIDS | EFD, microns | ΔP, mm of $H_2O$ | SHEATH | | CORE | |
|---|---|---|---|---|---|---|---|---|---|---|
| | | | | | | | wt. % | resin | resin | additive |
| E-23 | SB | C | 57 | 13.6 | 15 | 1.9 | 20 | PMP-1 | PP-2 | 0.15% CA-1 |
| E-24 | SB | C | 56 | 10.7 | 23 | 0.7 | 20 | PMP-1 | PP-2 | 0.15% CA-1 |

TABLE 10

<table>
<tr><th rowspan="2">EXAMPLE</th><th colspan="6">PRIMARY FILTER</th><th colspan="2">PREFILTER</th></tr>
<tr><th>No. of Layers</th><th>EFD, microns</th><th>Basis Weight, gsm</th><th>ΔP mm of $H_2O$</th><th>Resin</th><th>Additive</th><th>Web</th><th>Prefilter Layers</th></tr>
<tr><td>CE-11</td><td>1</td><td>7.9</td><td>57</td><td>4.0</td><td>PP-1</td><td>1% CA-4</td><td>None</td><td></td></tr>
<tr><td>CE-12</td><td>2</td><td colspan="5">same as CE-11</td><td>None</td><td></td></tr>
<tr><td>CE-13</td><td>1</td><td colspan="5">same as CE-11</td><td>CE-3</td><td>1</td></tr>
<tr><td>CE-14</td><td>2</td><td colspan="5">same as CE-3</td><td>none</td><td></td></tr>
<tr><td>E-25</td><td>1</td><td colspan="5">same as CE-11</td><td>E-6</td><td>1</td></tr>
<tr><td>E-26</td><td>1</td><td colspan="5">same as CE-11</td><td>E-6</td><td>2</td></tr>
<tr><td>E-27</td><td>1</td><td colspan="5">same as CE-11</td><td>E-23</td><td>1</td></tr>
<tr><td>E-28</td><td>1</td><td colspan="5">same as CE-11</td><td>E-24</td><td>1</td></tr>
<tr><td rowspan="2">E-29</td><td rowspan="2">1</td><td colspan="5" rowspan="2">same as CE-11</td><td>E-24</td><td rowspan="2">E23 and E24 where E23 contacts the primary filter</td></tr>
<tr><td>E-23</td></tr>
</table>

(continued)

| EXAMPLE | PRIMARY FILTER | | | | | | PREFILTER | |
|---|---|---|---|---|---|---|---|---|
| | No. of Layers | EFD, microns | Basis Weight, gsm | ΔP mm of $H_2O$ | Resin | Additive | Web | Prefilter Layers |
| E-30 | 1 | | *same as CE-3* | | E-10 | | 1 | |

TABLE 11

| EXAMPLE | ΔP, mm of $H_2O$ | %Pen0 | %Pen 100 | %Pen200 |
|---|---|---|---|---|
| CE-11 | 7.7 | 0.21 | 14.7 | 44.3 |
| CE-12 | 17.1 | 0.00 | .20 | 3.37 |
| CE-13 | 10.0 | 0.10 | 5.27 | 27.7 |
| CE-14 | 5.0 | 5.08 | 22.0 | 40.4 |
| E-25 | 10.2 | 0.09 | 2.30 | 8.5 |
| E-26 | 12.9 | 0.08 | .64 | 1.2 |
| E-27 | 9.4 | 0.32 | 8.71 | 28.0 |
| E-28 | 8.2 | 0.34 | 10.4 | 32.3 |
| E-29 | 10.3 | 0.29 | 3.03 | 7.78 |
| E-30 | 4.9 | 12.9 | 22.7 | 26.7 |

COMPARATIVE EXAMPLE CE-15 and EXAMPLE E-31

Table 12 (below) reports results for oil loading out to 1,000 mg of DOP for filter constructions CE-15 and E-31.

TABLE 12

| EXAMPLE | PRIMARY FILTER | PREFILTER | ΔP, mm of $H_2O$ | %Pen @ 0 mg | %Pen @ 1000 mg |
|---|---|---|---|---|---|
| CE-15 | CE-11 | 4 Layers of CE-3 | 17.5 | 0.003 | 50.2 |
| E-31 | CE-11 | 4 Layers of E-1 | 13.2 | 0.033 | 28.3 |

The preceding description, given in order to enable one of ordinary skill in the art to practice the claimed disclosure, is not to be construed as limiting the scope of the disclosure, which is defined by the claims.

## Claims

**1.** A thermoplastic core-sheath fiber comprising:

a polymer fiber core having a coextensive sheath layer disposed thereon, the sheath layer comprising poly(4-methyl-1-pentene), wherein the polymer fiber core comprises polypropylene, polyethylene, polyester, or polystyrene, and wherein the fiber core and the sheath layer have different compositions; and

an electrostatic charge enhancing additive, wherein the polymer fiber core comprises the electrostatic charge enhancing additive, and wherein the electrostatic charge enhancing additive is selected from the group consisting of pigments, light stabilizers, primary and secondary antioxidants, metal deactivators, hindered amines, hindered phenols, metal salts, phosphite triesters, phosphoric acid salts, fluorine-containing compounds, and combinations thereof.

**2.** The core-sheath fiber of claim 1, wherein the sheath layer comprises 1 to 40 percent by weight of the thermoplastic core-sheath fiber.

3. The core-sheath fiber of claim 1, wherein the core-sheath fiber has an electret charge.

4. The core-sheath fiber of claim 1, wherein core-sheath fiber has an average fiber diameter of 20 to 30 microns.

5. A nonwoven fibrous web comprising core-sheath fibers according to any preceding claim.

6. The nonwoven fibrous web of claim 5, further comprising diluent fibers intermingled with the core-sheath fibers.

7. A respirator comprising the nonwoven fibrous web of claim 5 or 6.

**Patentansprüche**

1. Eine thermoplastische Kern-Mantel-Faser, umfassend:

   einen Polymerfaserkern, der eine darauf angeordnete, flächengleiche Mantelschicht aufweist, wobei die Mantelschicht Poly(4-Methyl-1-Penten) umfasst, wobei der Polymerfaserkern Polypropylen, Polyethylen, Polyester oder Polystyrol umfasst und wobei der Faserkern und die Mantelschicht unterschiedliche Zusammensetzungen aufweisen; und

   ein die elektrostatische Ladung verstärkender Zusatzstoff, wobei der Polymerfaserkern den die elektrostatische Ladung verstärkenden Zusatzstoff umfasst und wobei der die elektrostatische Ladung verstärkende Zusatzstoff aus der Gruppe ausgewählt ist, bestehend aus Pigmenten, Lichtstabilisatoren, primären und sekundären Antioxidantien, Metalldesaktivatoren, gehinderten Aminen, gehinderten Phenolen, Metallsalzen, Phosphittriestern, Phosphorsäuresalzen, fluorhaltigen Verbindungen und Kombinationen davon.

2. Die Kern-Mantel-Faser nach Anspruch 1, wobei die Mantelschicht 1 bis 40 Gewichtsprozent der thermoplastischen Kern-Mantel-Faser umfasst.

3. Die Kern-Mantel-Faser nach Anspruch 1, wobei die Kern-Mantel-Faser eine Elektretladung aufweist.

4. Die Kern-Mantel-Faser nach Anspruch 1, wobei die Kern-Mantel-Faser einen durchschnittlichen Faserdurchmesser von 20 bis 30 Mikrometer aufweist.

5. Ein nicht gewebtes Faservlies, umfassend Kern-Hülle-Fasern nach einem der vorstehenden Ansprüche.

6. Das nicht gewebte Faservlies nach Anspruch 5, ferner umfassend mit den Kern-Hülle-Fasern vermischte Verdünnungsfasern.

7. Eine Atemschutzmaske, umfassend das nicht gewebte Vliesfaser nach Anspruch 5 oder 6.

**Revendications**

1. Fibre âme-gaine thermoplastique, comprenant :

   une âme de fibre polymère ayant une couche de gaine coextensive disposée sur celle-ci, la couche de gaine comprenant du poly(4-méthyl-1-pentène), dans laquelle l’âme de fibre polymère comprend du polypropylène, polyéthylène, polyester ou polystyrène, et dans laquelle l’âme de fibre et la couche de gaine ont des compositions différentes ; et

   un additif améliorant la charge électrostatique, dans laquelle l’âme de fibre polymère comprend l’additif améliorant la charge électrostatique, et dans laquelle l’additif améliorant la charge électrostatique est choisi dans le groupe constitué de pigments, photostabilisants, antioxydants primaires et secondaires, désactivateurs de métaux, amines encombrées, phénols encombrés, sels métalliques, triesters de phosphite, sels d’acide phosphorique, composés contenant du fluor, et combinaisons de ceux-ci.

2. Fibre âme-gaine selon la revendication 1, dans laquelle la couche de gaine comprend de 1 à 40 pour cent en poids de la fibre âme-gaine thermoplastique.

3. Fibre âme-gaine selon la revendication 1, dans laquelle la fibre âme-gaine a une charge d'électret.

4. Fibre âme-gaine selon la revendication 1, dans laquelle une fibre âme-gaine a un diamètre de fibre moyen de 20 à 30 microns.

5. Bande fibreuse non tissée comprenant des fibres âme-gaine selon l'une quelconque revendication précédente.

6. Bande fibreuse non tissée selon la revendication 5, comprenant en outre des fibres diluantes entremêlées avec les fibres âme-gaine.

7. Respirateur comprenant la bande fibreuse non tissée selon la revendication 5 ou 6.

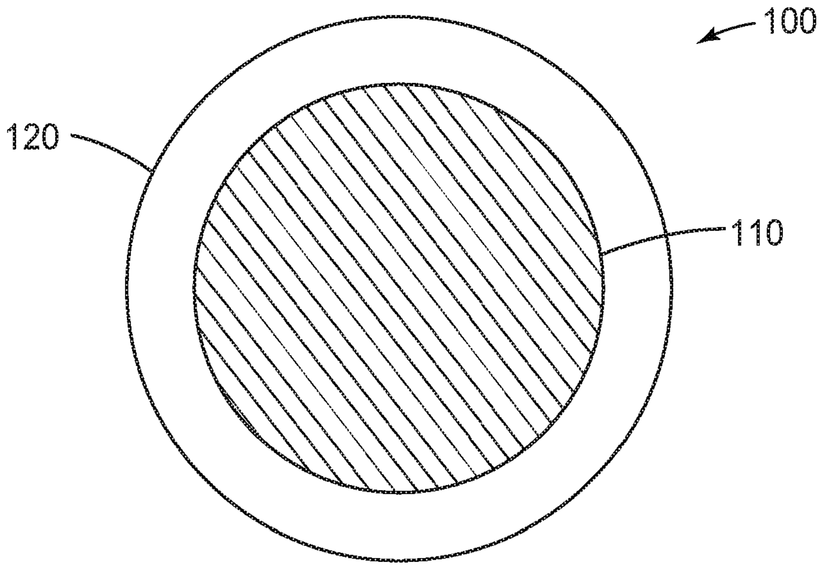


FIG. 1

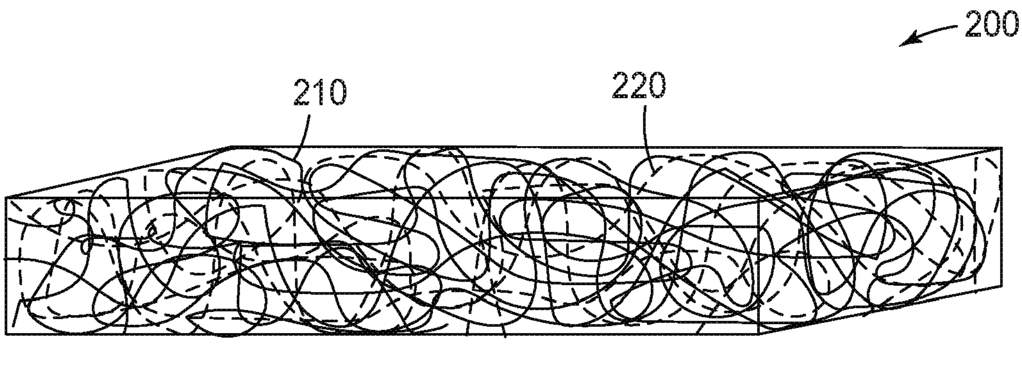


FIG. 2

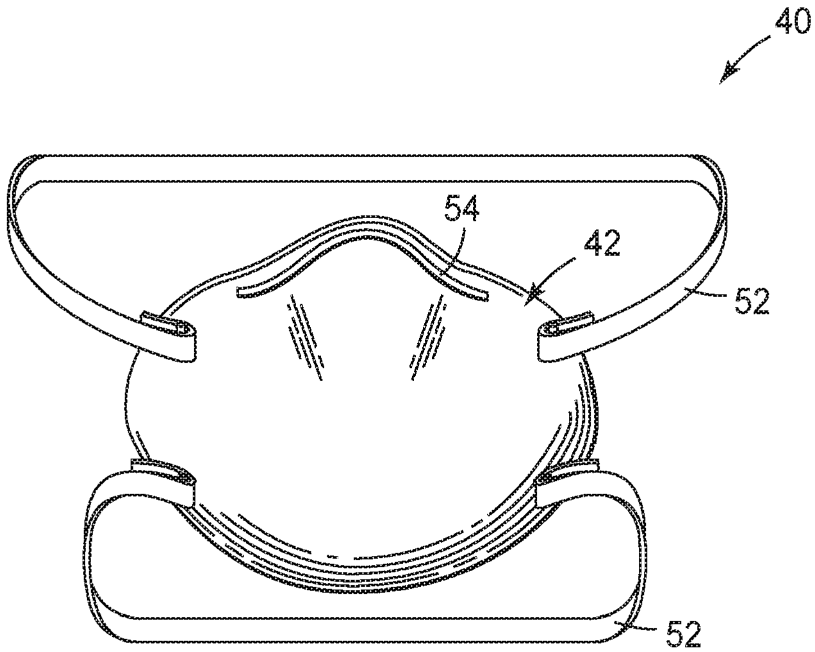


FIG. 3

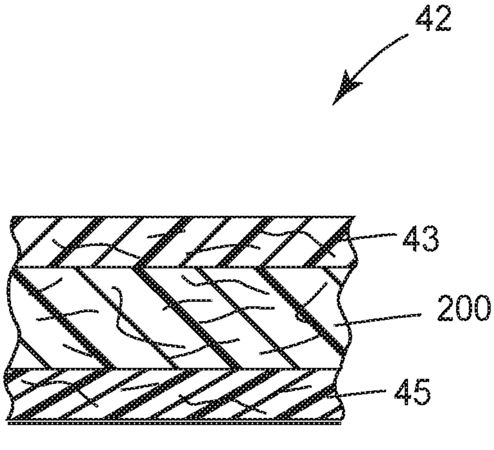


FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0325854 A
- JP 2008150753 B
- US 9815067 B, Schultz
- US 7879746 B, Klun
- US 20120077886 A, Scholz
- US 6268495 B
- US 5976208 A
- US 5968635 A
- US 5919847 A
- US 5908598 A, Rousseau
- US 20110137082 A, Li
- US 8613795 B, Li
- US 7390351 B, Leir
- US 5057710 A, Nishiura
- US 4652282 A
- US 4789504 A, Susumu
- US 8790449 B2, Li
- US 4789592 A, Taniguchi
- US 5336552 A, Strack
- US 4406850 A, Hills
- US 5458972 A, Hagen
- US 5411693 A, Wust
- US 5618479 A, Lijten
- US 5989004 A, Cook
- US 20110247839, Lalouch
- US 30782 A, van Turnhout
- US 31285 A, (van Turnhout
- US 32171 A, van Turnhout
- US 4215682 A, Davis
- US 4375718 A, Wadsworth
- US 5401446 A, Wadsworth
- US 4588537 A, Klaase
- US 4592815 A, Nakao
- US 6365088 B, Knight
- GB 384052 A, Hansen
- US 5643525 A, McGinty
- JP 4141679 B, Kawabe
- US 5496507 A, Angadjivand
- US 6824718 B, Eitzman
- US 6743464 B, Insley
- US 6454986 B, Eitzman
- US 6406657 B, Eitzman
- US 6375886 B, Angadjivand
- US 7765698 B, Sebastian
- US 5307796 A, Kronzer
- US 4827924 A, Japuntich
- US 5558089 A, Castiglione
- US 5509436 A, Japuntich
- US 4536440 A, Berg
- US 5325892 A, Japuntich
- US 4807619 A, Dyrud
- US 4886058 A, Brostrom
- RE 35062, Brostrom
- US 20190003112 A, Schultz


### Non-patent literature cited in the description


- Synbra Technologies, The Netherlands. *SYNTERRA PDLA 1010*
- **M. PAAJANEN**. *Journal of Physics D: Applied Physics*, 2001, vol. 34, 2482-2488
- **G. M. SESSLER** ; **J. E. WEST**. *Journal of Electrostatics*, 1975, vol. 1, 111-123
- *CHEMICAL ABSTRACTS*, 991-84-4
- *CHEMICAL ABSTRACTS*, 61617-00-3
- *CHEMICAL ABSTRACTS*, 71878-19-8
- *CHEMICAL ABSTRACTS*, 82451-48-7
- *CHEMICAL ABSTRACTS*, 93098-40-7
- **DAVIES, C. N.** The Separation of Airborne Dust and Particulates. *Institution of Mechanical Engineers, London Proceedings, IB*, 1952